# EUROPEAN PATENT APPLICATION

(11) **EP 4 242 084 A1**
(43) Date of publication of application: **13.09.2023**
(21) Application number: 21900034.6
(22) Date of filing: 01.12.2021
(51) Int. Cl.: B61D 27/00, B60R 16/03

(54) **RAIL VEHICLE, AND RAIL VEHICLE VENTILATION SYSTEM AND CONTROL METHOD THEREFOR**

(30) Priority: 01.12.2020 CN 202011391963
(71) Applicant: Shandong Longertek Technology Co., Ltd., Jinan, Shandong 271100 (CN)
(72) Inventor: DONG, Na, Jinan, Shandong 271100 (CN); ZHAO, Donghuai, Jinan, Shandong 271100 (CN); LU, Yanle, Jinan, Shandong 271100 (CN)
(74) Representative: Grassi, Stefano
(86) International application number: PCT/CN2021/134855
(87) International publication number: WO 2022/117008

(57) **Abstract**

A control method for a rail vehicle ventilation system, a rail vehicle ventilation system (100) and a rail vehicle. The rail vehicle ventilation system (100) includes a main power supply line (110) and a backup storage battery power supply line (120); wherein the main power supply line (110) has a ventilator inverter (111), and the backup storage battery power supply line (120) has an emergency ventilation inverter (122). The control method includes the following steps: determining whether the ventilator inverter (111) failure is locked; if the ventilator inverter (111) failure is not locked, turning on or maintaining the main power supply line (110) and controlling the main power supply line (110) to supply power to the ventilator (130) via the ventilator inverter (111); and if the ventilator inverter (111) failure is locked, turning on the backup storage battery power supply line (120) and controlling the backup storage battery power supply line (120) to boost and invert a battery power source (121) via the emergency ventilation inverter (122) and then supplying power to the ventilator (130).

## Description

### Cross-Reference to Related Application

The present disclosure takes the patent document of application No. 202011391963.0, filed on December 1, 2020 and entitled " Control Method for Rail Vehicle Ventilation System, Rail Vehicle Ventilation System and Rail Vehicle ", the entire disclosure of the document being incorporated herein by reference.

### Technical Field

The present disclosure relates to the field of rail vehicles, and in particular, to a control method for a rail vehicle ventilation system, a rail vehicle ventilation system and a rail vehicle.

### Background

A conventional variable ventilator frequency control for an air conditioner of a rail transit vehicle is to use one inverter to control two ventilators in an air conditioning unit. Currently, a starting sequence of a variable-frequency air conditioner of the rail transit vehicle is: ventilators, compressors, and condenser fans.

When a ventilator inverter fails and cannot work, ventilators of the air conditioner cannot operate, the compressor and the condenser fan stop operation, and the air conditioner cannot perform normal cooling, heating and ventilation, thereby losing the air conditioning capacity, reducing the comfort of passengers and reducing the reliability of the air conditioner.

In view of this, the present disclosure is specifically proposed.

### Summary

In order to solve the described technical problems, an inventive object of the present disclosure is to provide a control method for a rail vehicle ventilation system, which enables a backup storage battery power supply line in time when a ventilator inverter is in a failure state, so as to ensure normal working of ventilators.

In order to solve the described technical problems, the technical solution employed by the present disclosure is: a control method for a rail vehicle ventilation system, wherein the rail vehicle ventilation system includes a main power supply line and a backup storage battery power supply line, the main power supply line is provided with a ventilator inverter, and the backup storage battery power supply line is provided with an emergency ventilation inverter, and the control method includes the following steps:
whether the ventilator inverter failure is locked is determined;
in a case where the ventilator inverter failure is not locked, the main power supply line is turned on or maintained and the main power supply line to supply power to ventilators via the ventilator inverter is controlled; and
in a case where the ventilator inverter failure is locked, the backup storage battery power supply line is turned on and the backup storage battery power supply line is controlled to boost and invert a storage battery power source via the emergency ventilation inverter and then power is supplied to the ventilators.

In the described technical solution, whether the ventilator inverter failure is locked is determined specifically includes:
working state information of the ventilator inverter is acquired;
whether the working state information satisfies a failure locking condition is determined; and
in a case where the working state signal satisfies the failure locking condition, the ventilator inverter failure is locked is determined.

In the described technical solutions, the failure locking condition includes at least one of the following:
whether a failure duration of the ventilator inverter exceeds a preset duration is determined; and
whether the number of failures of the ventilator inverter reaches a preset number is determined.

In any one of the described technical solutions, working state information of the ventilator inverter is acquired specifically includes:
a working state signal of the ventilator inverter is collected in real time;
according to the collected working state signal of the ventilator inverter, whether there is a failure in the ventilator inverter is determined;
in a case where there is the failure in the ventilator inverter, the ventilator inverter is suspended; otherwise, the ventilator inverter is turned on or maintained, so that the main power supply line supplies power to the ventilators via the ventilator inverter; and
after the ventilator inverter is suspended, the working state information is generated.

In the described technical solutions, before the working state information is generated, the method further includes:
whether the failure of the ventilator inverter has been cleared is determined;
in a case where the failure of the ventilator inverter has been cleared, the main power supply line is turned on;
otherwise, the failure is timed, and the number of failures of the ventilator inverter are increased by one; and
the working state information is generated according to the failure duration and an accumulated number of failures.

In the described technical solutions, in a case where the working state information does not satisfy the failure locking condition, continuing to determine whether the failure of the ventilator inverter has been cleared.

In any one of the described technical solutions, the rail vehicle ventilation system further includes an air conditioning unit, and the air conditioning unit includes a fresh air damper and an return air damper, wherein
after the backup storage battery power supply line is turned on and the backup storage battery power supply line is controlled to boost and invert the storage battery power source via the emergency ventilation inverter and then power is supplied to the ventilators, an opening degree of the fresh air damper is controlled to be increased, and an opening degree of the return air damper is controlled to be decreased or closed.

In any one of the described technical solutions, the method further includes:
whether a power source of the main power supply line fails is determined; and
in a case where the power source of the main power supply line fails, the backup storage battery power supply line is turned on and the backup storage battery power supply line is controlled to boost and invert the storage battery power source via the emergency ventilation inverter and then power to the ventilators is supplied.

Correspondingly, the present disclosure further provides a rail vehicle ventilation system, including:
a main power supply line, having a ventilator inverter;
a backup storage battery power supply line, having an emergency ventilation inverter;
at least one ventilator, wherein the main power supply line and the backup storage battery power supply line are respectively electrically connected to the ventilator, and the main power supply line and the backup storage battery power supply line are connected in parallel; and
a controller, for executing the steps of the control method for the rail vehicle ventilation system according to any one of the described technical solutions.

Correspondingly, the present disclosure further provides a rail vehicle, including:
the rail vehicle ventilation system according to the described technical solutions.
In the present disclosure, by improving the design of a control function of the rail vehicle ventilation system, when the ventilation function fails for some reasons, the ventilation system enters an emergency ventilation inverter operation mode autonomously, so as to provide an alternating-current power source for the ventilators, and the ventilators can start and operate, and thus a compressor and a condensate fan can start and operate to achieve heating and cooling air conditioning, thereby effectively improving the reliability of the air conditioning unit and the comfort of passengers.

Hereinafter, the specific embodiments of the present disclosure will be further described in detail with reference to the accompanying drawings.

### Brief Description of the Drawings

The drawings, as a part of the present disclosure, are used for providing further understanding of the present disclosure, and the illustrative embodiments of the present disclosure and illustrations thereof are used for explaining the present disclosure, rather than constitute inappropriate limitation on the present disclosure. Apparently, the accompanying drawings in the following description merely relate to some embodiments, and for a person of ordinary skill in the art, other accompanying drawings could also be obtained according to these accompanying drawings without involving any inventive effort. In the drawings:
Fig. 1 is a schematic block diagram of a flowchart of a control method for a rail vehicle ventilation system according to some embodiments of the present disclosure;
Fig. 2 is a schematic structural diagram of a rail vehicle ventilation system according to some embodiments of the present disclosure;
Fig. 3 is a schematic block diagram of a flowchart of a control method for a rail vehicle ventilation system according to some embodiments of the present disclosure; and
Fig. 4 is a schematic block diagram of a flowchart of a control method for a rail vehicle ventilation system according to some embodiments of the present disclosure.

In the drawings: 100. Rail vehicle ventilation system; 110. Main power supply line; 111. Ventilator inverter; 112. First switch; 113. Power source of the main power supply line; 120. Backup storage battery power supply line; 121. Storage battery power source; 122. Emergency ventilation inverter; 123. Second switch; 130. Ventilator; 140. Controller.

It should be noted that these accompanying drawings and textual description are not intended to limit the scope of concept of the present disclosure in any way, but to illustrate the concept of the present disclosure for a person skilled in the art by reference to specific embodiments.

### Detailed Description of the Embodiments

In order to make objects, technical solutions and advantages of embodiments of the present disclosure clearer, hereinafter, the technical solutions in the embodiments will be clearly and completely described in combination with the accompanying drawings in the embodiments of the present disclosure. The following embodiments are used to illustrate the present disclosure, but are not intended to limit the scope of the present disclosure.

In the illustration of the present disclosure, it should be noted that orientation or position relationships indicated by terms such as "upper", "lower", "front", "rear", "left", "right", "vertical", "inner", "outer", etc. are orientation or position relationships based on the accompanying drawings, and are only used to facilitate the illustration of the present disclosure and to simplify the illustration, rather than indicating or implying that a device or element referred to must have a specific orientation, and be constructed and operated in the specific orientation, and therefore said terms cannot be understood as limitation to the present disclosure.

In the illustration of the present disclosure, it should be noted that unless otherwise explicitly specified and limited, terms "mount", "connect to", and "connecting" should be understood broadly, and for example, may be fixed connection, and may also be detachable connection, or integral connection; may be mechanical connection, and may also be electrical connection; and may be direct connection, and may also be indirect connection by means of an intermediate medium. For a person of ordinary skill in the art, the specific meanings of the described terms in the present disclosure could be understood according to specific situations.

Hereinafter, the present disclosure will be further described in detail in combination with the embodiments.

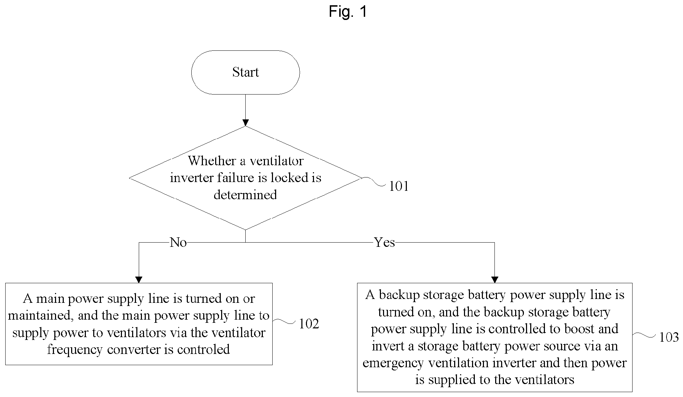

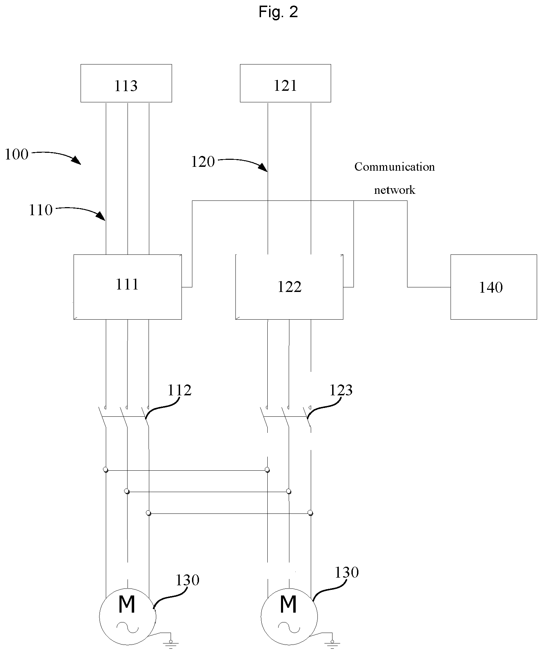

As shown in Figs. 1 and 2, the present embodiment provides a control method for a rail vehicle ventilation system 100; wherein the rail vehicle ventilation system 100 includes a main power supply line 110 and a backup storage battery power supply line 120; the main power supply line 110 has a ventilator inverter 111, and the backup storage battery power supply line 120 has an emergency ventilation inverter 122.

Specifically, the main power supply line 110 includes a power source 113 of the main power supply line, specifically, the power source 113 of the main power supply line is an alternating-current power source, the power source 113 of the main power supply line is electrically connected to the ventilator inverter 111, and the ventilator inverter 111 is electrically connected to ventilators 130; wherein a first switch 112 is arranged on a line between the ventilator inverter 111 and the ventilators 130, and the first switch 112 is configured to control connection or disconnection between the ventilator inverter 111 and the ventilators 130.

The backup storage battery power supply line 120 includes a storage battery power source 121 and an emergency ventilation inverter 122, wherein the storage battery power source 121 is electrically connected to the emergency ventilation inverter 122, and is boosted and inverted by the emergency ventilation inverter 122 and then converted into an alternating-current, and the emergency ventilation inverter 122 is electrically connected to the ventilators 130; wherein a second switch 123 is arranged on a line between the emergency ventilation inverter 122 and the ventilators 130, and the second switch 123 is configured to control connection or disconnection between the emergency ventilation inverter 122 and the ventilators 130.

The main power supply line 110 and the backup storage battery power supply line 120 are connected in parallel.

The rail vehicle ventilation system 100 further includes a controller 140; the controller 140 is respectively electrically connected to the main power supply line 110 and the backup storage battery power supply line 120, and is configured to be able to respectively control the first switch 112, the second switch 123, the ventilator inverter 111, the storage battery power source 121, the emergency ventilation inverter 122, etc.

As shown in Fig. 1, the control method includes the following steps:
S101: whether the ventilator inverter 111 failure is locked is determined;
S102: if the ventilator inverter 111 failure is not locked, or maintaining the main power supply line 110 is turned on or maintained, and the main power supply line 110 to supply power to the ventilators 130 via the ventilator inverter 111 is controlled; and
S103: if the ventilator inverter 111 failure is locked, the backup storage battery power supply line 120 is turned on, and the backup storage battery power supply line 120 is controlled to boost and invert the storage battery power source 121 via the emergency ventilation inverter 122 and then power is supplied to the ventilators 130.

In the present embodiment, by improving the design of a control function of the rail vehicle ventilation system 100, when the ventilation function fails for some reasons, the ventilation system enters an emergency ventilation operation mode autonomously, so as to provide an alternating-current power source for the ventilators 130, and the ventilators 130 can start and operate, and thus a compressor and a condensate fan can start and operate to achieve heating and cooling air conditioning, thereby effectively improving the reliability of the air conditioning unit and the comfort of passengers.

In some embodiments, the step S101 of whether the ventilator inverter 111 failure is locked is determined specifically includes:
working state information of the ventilator inverter 111 is acquired;
whether the working state information satisfies a failure locking condition is determined; and
if it is determined that the working state signal satisfies the failure locking condition, the ventilator inverter 111 failure is locked is determined.

In some embodiments, the failure locking condition includes: whether a failure duration of the ventilator inverter 111 exceeds a preset duration is determined.

In the present embodiment, when the ventilator inverter 111 fails and the failure duration reaches the preset duration, it is determined that the ventilator inverter 111 failure is locked, thereby effectively avoiding the problem of misjudgment caused by detection errors, environmental factors, etc., ensuring the accuracy of detection and determination, and improving the system reliability.

Preferably, the preset duration is 3 - 7 minutes.

Preferably, the preset duration is 5 minutes.

In some other embodiments, the failure locking condition includes: whether the number of failures of the ventilator inverter 111 reaches a preset number is determined.

In the present embodiment, when the ventilator inverter 111 fails and the number of failures reaches a preset number, it is determined that the ventilator inverter 111 failure is locked, thereby effectively avoiding the problem of misjudgment caused by detection errors, environmental factors, etc., ensuring the accuracy of detection and determination, and improving the system reliability.

Preferably, the preset number of times is 2 - 6.

Preferably, the preset number of times is 3.

Of course, a person skilled in the art could understand that the two failure locking conditions do not conflict with each other. In some embodiments, the system can be designed to perform determination according to the two determination conditions, and when any one of the two determination conditions is satisfied, it can be determined that the ventilator inverter 111 failure is locked.

In some embodiments, working state information of the ventilator inverter 111 is acquired specifically includes:
a working state signal of the ventilator inverter 111 is collected in real time;
according to the collected working state signal of the ventilator inverter 111, whether there is a failure in the ventilator inverter 111 is determined;
if there is the failure in the ventilator inverter 111, the ventilator inverter 111 is suspended; otherwise, the ventilator inverter 111 is turned on or maintained, such that the main power supply line 110 supplies power to the ventilators 130 via the ventilator inverter 111

After the ventilator inverter 111 is suspended, the working state information is generated.

In the present embodiment, the working state signal of the ventilator inverter 111 is collected in real time; when the ventilator inverter 111 fails is collected, the ventilator inverter 111 is suspended; and when the ventilator inverter 111 is normal is collected, the ventilator inverter 111 is turned on or continuously maintained, thereby ensuring normal working of the ventilator inverter 111.

In some embodiments, before the working state information is generated, the method further includes:
whether the failure of the ventilator inverter 111 has been cleared is determined;
if the failure of the ventilator inverter 111 has been cleared, the main power supply line 110 is turned on;
otherwise, the failure is timed, and the number of failures of the ventilator inverter 111 are increased by one; and
working state information is generated according to the failure duration and an accumulated number of failures.

In the present embodiment, upon detection that the ventilator inverter 111 fails, continuing to detect the ventilator inverter 111 in real time; upon detection that the failure of the ventilator inverter 111 has been cleared, it indicates that the previous detection may be wrong, and the ventilator inverter 111 has no failure, then the main power supply line 110 is turned on again, so that the main power supply line 110 supplies power to the ventilator inverter 111, thereby ensuring normal working of the ventilator inverter 111.

In some embodiments, if the working state information does not satisfy the failure locking condition, continuing to determine whether the failure of the ventilator inverter 111 has been cleared.

In some embodiments, the rail vehicle ventilation system 100 further has an air conditioning unit, and the air conditioning unit includes a fresh air damper and an return air damper, wherein
after the backup storage battery power supply line 120 is turned on and the backup storage battery power supply line 120 is controlled to boost and invert the storage battery power source 121 via the emergency ventilation inverter 122 and then power is supplied to the ventilators 130, an opening degree of the fresh air damper is controlled to be increased, and an opening degree of the return air damper is controlled to be decreased or closed.

In the present embodiment, the ventilator inverter 111 fails, and thus the backup storage battery power supply line 120 is turned on to supply power to the ventilators 130. As the power supply capability of the backup storage battery power supply line 120 is limited, the opening degree of the fresh air damper is controlled to be increased, and the opening degree of the return air damper is controlled to be decreased or closed, so as to ensure the ventilation effect.

In some embodiments, the method further includes:
whether the power source 113 of the main power supply line fails is determined; and
if the power source 113 of the main power supply line fails, the backup storage battery power supply line 120 is turned on, and the backup storage battery power supply line 120 is controlled to boost and invert the storage battery power source 121 via the emergency ventilation inverter 122 and then power to the ventilators 130 is supplied.

In the present embodiment, upon detection that the power source 113 of the main power supply line fails, the backup storage battery power supply line 120 can also be enabled and the backup storage battery power supply line 120 is controlled to supply power to the ventilators 130, thereby ensuring normal working of the ventilators 130.

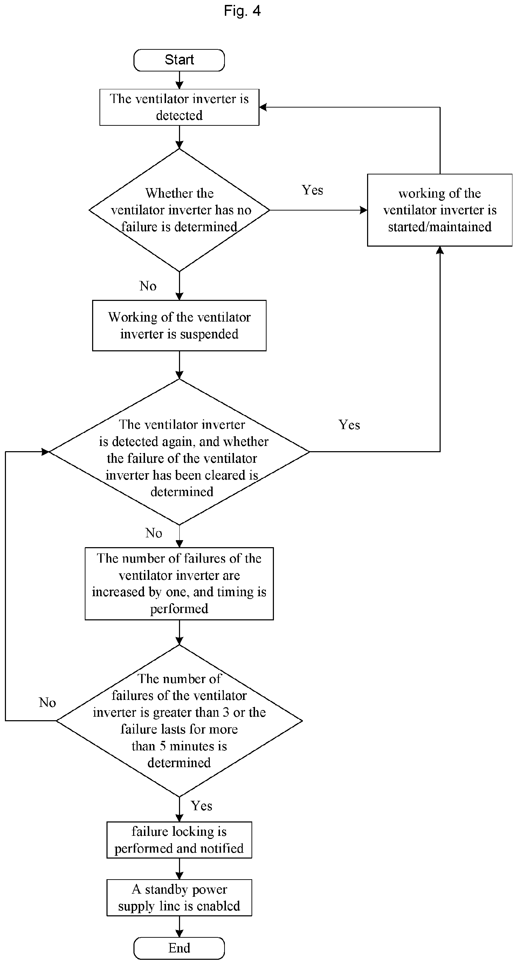

In some specific embodiments, as shown in Fig. 4, a control method for a rail vehicle ventilation system 100 includes the following steps:
the ventilator inverter 111 is detected;
whether the ventilator inverter 111 has no failure is determined;
if it is determined that the ventilator inverter 111 has no failure, working of the ventilator inverter 111 is started/maintained;
if it is determined that the ventilator inverter 111 fails, working of the ventilator inverter 111 is suspended;
the ventilator inverter 111 is detected again, and whether the failure of the ventilator inverter 111 has been cleared is determined;
if it is determined that the failure of the ventilator inverter 111 has been cleared, working of the ventilator inverter 111 is started/maintained;
otherwise, accumulatively the number of failures of the ventilator inverter 111 are increased by one, and timing is performed;
the number of failures of the ventilator inverter 111 is greater than 3 or the failure lasts for more than 5 minutes is determined;
if so, failure locking is performed and notified; and if not, continue to determine whether the failure of the ventilator inverter 111 has been cleared is returned to.

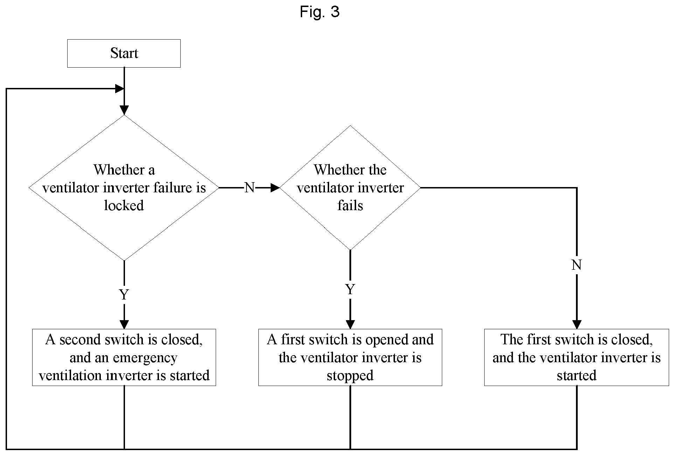

In some other specific embodiments, as shown in Fig. 3, a control method for a rail vehicle ventilation system 100 includes the following steps:
whether the ventilator inverter 111 failure is locked is determined;
if the ventilator inverter 111 failure is locked, the second switch 123 is closed, the emergency ventilation inverter 122 is started, and the fresh air damper is completely opened, and the return air damper is completely closed;
otherwise, whether the ventilator inverter 111 has no failure is determined;
if the ventilator inverter 111 has no failure, the first switch 112 is closed, and the ventilator inverter 111 is started; and
otherwise, the first switch 112 is opened and the ventilator inverter 111 is stopped.

Further, continuing to determine whether the number of failures of the ventilator inverter 111 is greater than or equal to 3;
if so, failure locking on the ventilator inverter 111 is performed; otherwise, whether the failure of the ventilator inverter 111 has been cleared is determined;
if the failure of the ventilator inverter 111 has been cleared, the number of failures are increased by 1, the first switch 112 is closed, and the ventilator inverter 111 is started; otherwise, whether the failure of the ventilator inverter 111 has lasted for 5 minutes is determined;
if the failure of the ventilator frequency ventilator 111 has lasted for 5 minutes, failure locking on the ventilator frequency ventilator 111 is performed; otherwise, continue to determine whether the failure of the ventilator frequency ventilator 111 has been cleared is returned to.

Further, an air conditioner to determine to perform cooling/heating is controlled according to an external environment temperature;
whether the ventilators 130 operate is determined, if so, the compressor to operate is controlled, and the frequency of the compressor is adjusted; then the condenser fan to operate is controlled; and then, the opening degrees of the air valves is adjusted according to a load.

Otherwise, the compressor to stop operation is controlled; the condenser fan to stop operation is controlled; and the air valves to close is controlled.

The present disclosure further provides a rail vehicle ventilation system 100, including:
a main power supply line 110, having a ventilator inverter 111;
a backup storage battery power supply line 120;
ventilators 130, wherein the main power supply line 110 and the backup storage battery power supply line 120 are respectively electrically connected to the ventilators 130, and the main power supply line 110 and the backup storage battery power supply line 120 are connected in parallel; and
a controller 140, for executing the steps of the control method for the rail vehicle ventilation system 100 according to any one of the described technical solutions.

The present disclosure further provides a rail vehicle, including: the rail vehicle ventilation system 100 according to the described technical solutions.

In some specific embodiments of the present disclosure,
as shown in Fig. 1 to Fig. 4, the present embodiment provides a rail vehicle ventilation system 100; the rail vehicle ventilation system 100 includes a main power supply line 110, a backup storage battery power supply line 120, and two ventilators 130, wherein the main power supply line 110 has a ventilator inverter 111.

Specifically, the main power supply line 110 includes an alternating-current power source, the alternating-current power source is electrically connected to the ventilator inverter 111, and the ventilator inverter 111 is electrically connected to the ventilators 130; wherein a first control switch is arranged on a line between the ventilator inverter 111 and the ventilators 130, and the first control switch is configured to control connection or disconnection between the ventilator inverter 111 and the ventilators 130.

The backup storage battery power supply line 120 includes a storage battery 121 power source and an emergency ventilation inverter 122, wherein the storage battery 121 power source is electrically connected to the emergency ventilation inverter 122, and is converted into an alternating-current via the emergency ventilation inverter 122, and the emergency ventilation inverter 122 is electrically connected to the ventilators 130; wherein a second control switch is arranged on a line between the emergency ventilation inverter 122 and the ventilators 130, and the second control switch is configured to control connection or disconnection between the emergency ventilation inverter 122 and the ventilators 130.

The main power supply line 110 and the backup storage battery power supply line 120 are connected in parallel.

The rail vehicle ventilation system 100 further includes a controller 140. The controller 140 is respectively electrically connected to the main power supply line 110 and the backup storage battery power supply line 120, and is configured to be able to control the first control switch and the second control switch respectively.

Specifically, the air conditioning controller 140 collects a state signal of the ventilator inverter 111, and monitors in real time whether a working state of the inverter is normal.

Upon detection that the ventilator inverter 111 is normal, the air conditioning controller 140 controls the first switch 112 to be closed, controls the ventilator inverter 111 to be started, such that the two ventilators 130 operate.

Upon detection that the ventilator inverter 111 fails, the air conditioning controller 140 controls the first switch 112 to be opened, and controls frequency conversion boards of the ventilators 130 to stop operating.

Upon detection that the failure of the ventilator inverter 111 has been cleared, the air conditioning controller 140 closes the first switch 112 again, and starts the frequency conversion boards of the ventilators 130; and upon detection that an accumulated number of failures of the frequency conversion boards of the ventilators 130 reaches 3 times, the air conditioning controller 140 performs failure locking on the frequency conversion boards of the ventilators 130, and reports failure information of the ventilator inverter 111 to a driver's cab.

Upon detection that the failure of the frequency conversion boards of the ventilators 130 lasts for 5 minutes and has not been cleared, the air conditioning controller 140 performs failure locking on the frequency conversion boards of the ventilators 130, and reports failure information of the ventilator inverter 111 to the driver's cabin.

After confirming that the ventilator inverter 111 failure is locked, the air conditioning controller 140 controls the second switch 123 to be closed, starts the emergency ventilation inverter 122, such that the two ventilators 130 continue to operate.

After starting the ventilators 130, the compressor and the condenser fan are allowed to start, and the air conditioner is allowed to enter a cooling/heating mode to operate.

In this case, the fresh air damper and the return air damper of the air conditioning unit automatically adjust the opening degrees of the air valves according to a passenger capacity signal, so as to provide ventilation for a carriage.

In this case, the compressor may operate in a full frequency band according to the operation states of the ventilators 130, or may operate at the maximum frequency defined as half the rated frequency according to program setting. The air conditioner keeps certain cooling or heating capacity, and provides cooling or heating for the carriage, so that the reliability of the air conditioning system is comprehensively improved.

The air conditioner automatically performs mode setting according to the environment temperature, enters a cooling/heating mode to operate, and provides air conditioning for the carriage, thereby improving the comfort of passengers and improving the reliability of the air conditioning unit.

The contents above are only preferred embodiments of the present disclosure, and are not intended to limit the present disclosure in any form. The present disclosure has been disclosed in the preferred embodiments, but the preferred embodiments are not used to limit the present disclosure. Any person skilled in the art could make some changes or modifications by using the technical contents prompted above to obtain equivalent embodiments having equivalent variations without departing from the scope of the technical solutions of present disclosure. However, any contents without departing from the technical solutions of the present disclosure and any simple modifications, equivalent variations and modifications made to the described embodiments according to the technical essence of the present disclosure still belong to the scope of the solutions of the present disclosure.

## Claims

1. A control method for a rail vehicle ventilation system, wherein the rail vehicle ventilation system comprises a main power supply line and a backup storage battery power supply line, the main power supply line is provided with a ventilator inverter, and the backup storage battery power supply line is provided with an emergency ventilation inverter, and the control method comprises the following steps:
determining whether the ventilator inverter failure is locked;
in a case where the ventilator inverter failure is not locked, turning on or maintaining the main power supply line and controlling the main power supply line to supply power to ventilators via the ventilator inverter; and
in a case where the ventilator inverter failure is locked, turning on the backup storage battery power supply line and controlling the backup storage battery power supply line to boost and invert a storage battery power source via the emergency ventilation inverter and then supplying power to the ventilators.

2. The control method for a rail vehicle ventilation system according to claim 1, wherein determining whether the ventilator inverter failure is locked specifically comprises:
acquiring working state information of the ventilator inverter;
determining whether the working state information satisfies a failure locking condition; and
in a case where the working state signal satisfies the failure locking condition, determining that the ventilator inverter failure is locked.

3. The control method for a rail vehicle ventilation system according to claim 2, wherein the failure locking condition comprises at least one of the following:
determining whether a failure duration of the ventilator inverter exceeds a preset duration; and
determining whether the number of failures of the ventilator inverter reaches a preset number.

4. The control method for a rail vehicle ventilation system according to claim 2 or 3, wherein acquiring working state information of the ventilator inverter specifically comprises:
collecting a working state signal of the ventilator inverter in real time;
according to the collected working state signal of the ventilator inverter, determining whether there is a failure in the ventilator inverter;
in a case where there is the failure in the ventilator inverter, suspending the ventilator inverter; otherwise, turning on or maintaining the ventilator inverter, so that the main power supply line supplies power to the ventilators via the ventilator inverter; and
after suspending the ventilator inverter, generating the working state information.

5. The control method for a rail vehicle ventilation system according to claim 4, wherein before generating the working state information, the method further comprises:
determining whether the failure of the ventilator inverter has been cleared;
in a case where the failure of the ventilator inverter has been cleared, turning on the main power supply line;
in a case where the failure of the ventilator inverter has not been cleared, timing the failure, and increasing the number of failures of the ventilator inverter by one; and
generating the working state information according to the failure duration and an accumulated number of failures.

6. The control method for a rail vehicle ventilation system according to claim 5, wherein
in a case where the working state information does not satisfy the failure locking condition, continuing to determine whether the failure of the ventilator inverter has been cleared.

7. The control method for a rail vehicle ventilation system according to any one of claims 1-3, wherein the rail vehicle ventilation system further comprises an air conditioning unit, and the air conditioning unit comprises a fresh air damper and an return air damper, wherein
after the backup storage battery power supply line is turned on and the backup storage battery power supply line is controlled to boost and invert the storage battery power source via the emergency ventilation inverter and then power is supplied to the ventilators, an opening degree of the fresh air damper is controlled to be increased, and an opening degree of the return air damper is controlled to be decreased or closed.

8. The control method for a rail vehicle ventilation system according to any one of claims 1-3, wherein the method further comprises:
determining whether a power source of the main power supply line fails; and
in a case where the power source of the main power supply line fails, turning on the backup storage battery power supply line and controlling the backup storage battery power supply line to boost and invert the storage battery power source via the emergency ventilation inverter and then supplying power to the ventilators.

9. A rail vehicle ventilation system, comprising:
a main power supply line, having a ventilator inverter;
a backup storage battery power supply line, having an emergency ventilation inverter;
at least one ventilator, wherein the main power supply line and the backup storage battery power supply line are respectively electrically connected to the ventilator, and the main power supply line and the backup storage battery power supply line are connected in parallel; and
a controller, for executing the steps of the control method for the rail vehicle ventilation system according to any one of claims 1-8.

10. A rail vehicle, comprising:
a rail vehicle ventilation system according to claim 9.
